Europäisches Patentamt

(19) European Patent Office

Office européen des brevets

(11) Publication number: **0 068 580**
**B1**

(12) **EUROPEAN PATENT SPECIFICATION**

(45) Date of publication of patent specification: **12.12.84**

(51) Int. Cl.³: **C 03 C 13/00**

(21) Application number: **82200776.1**

(22) Date of filing: **23.06.82**

(54) **Optical fibre of the graded index type and method of producing same.**

(30) Priority: **26.06.81 NL 8103089**

(43) Date of publication of application:
**05.01.83 Bulletin 83/01**

(45) Publication of the grant of the patent:
**12.12.84 Bulletin 84/50**

(84) Designated Contracting States:
**BE DE FR GB IT NL SE**

(56) References cited:
**GB-A-1 160 535**
**US-A-4 264 131**

**CHEMICAL ABSTRACTS, vol. 84, no. 16, 19th April 1976, page 315, no. 110366r, Columbus Ohio (USA);**

(73) Proprietor: **N.V. Philips' Gloeilampenfabrieken**
**Groenewoudseweg 1**
**NL-5621 BA Eindhoven (NL)**

(72) Inventor: **Joorman, Hendrik Jacobus Maria**
**c/o Int. Octrooibureau B.V. Prof. Holstlaan 6**
**NL-5656 AA Eindhoven (NL)**
Inventor: **Spierings, Gijsbertus Adrianus**
**Cornelis Maria**
**c/o Int. Octrooibureau B.V. Prof. Holstlaan 6**
**NL-5656 AA Eindhoven (NL)**

(74) Representative: **Auwerda, Cornelis Petrus et al**
**INTERNATIONAAL OCTROOIBUREAU B.V. Prof.**
**Holstlaan 6**
**NL-5656 AA Eindhoven (NL)**

Courier Press, Leamington Spa, England.

## Description

The invention relates to an optical fibre of the graded index type consisting of a silicate glass containing magnesium oxide together with one or more metal oxides with a cation which can be exchanged for the magnesium cation. The refractive index gradient is caused by a decreasing metal oxide concentration and an increasing magnesium oxide concentration from the fibre axis in the direction of the fibre circumference.

Optical fibres of this type are known from the published United Kingdom Patent Application GB 2,002,341. The glasses described therein are of the boro-silicate type and contain alkali metal oxides in addition to metal oxides with exchangeable cations, such as alkaline earth oxides. The optical fibres are produced by means of the double crucible technique.

Purer starting materials are becoming available to an ever increasing extent for producing glasses for the manufacture of optical fibres by the double crucible method. As a consequence the attenuation of the light signal depends to an ever diminishing extent on impurities in the glass originating from the starting materials.

Attenuation of the light signal however consists also in part of the so-called intrinsic attenuation, which depends on the properties of the glass constituents per se.

The wavelength range between approximately 1100 and 1500 nm is becoming of increasing interest in optical telecommunications.

It has been found that at wavelengths longer than approximately 1200 nm boron oxide absorbs light in a troublesome manner. Because of a high intrinsic absorption borosilicate glasses are therefore not suitable for use in said wavelength range if low intrinsic attenuation is aimed at.

The invention has for its object to provide a glass fibre of the type described in the opening paragraph, having a small intrinsic attenuation between 1100 and 1500 nm.

According to the invention, this object is accomplished by means of a fibre which is characterized in that it consists of a glass having the following composition:

60 to 70 mole % silicon dioxide

15 to 30 mole % alkalimetal oxides, the quantity of lithium oxide being 0—15 mole %

10 to 25 mole % magnesium oxide in combination with at least one metal oxide chosen from the group consisting of CaO, SrO, BaO and ZnO, the quantity of calcium oxide being 0—15 mole % and the content of impurities absorbing in the wavelength range up to 1500 nm being less than 0.01 ppm (parts per million).

In glasses of this composition up to 5 mole % of the silicon dioxide may be replaced by $Al_2O_3$ and/or $GeO_2$ and up to 2.5 mole % of the silicon dioxide may be replaced by $Y_2O_3$ and/or $ZrO_2$ calculated with respect to the total glass composition.

The alkali metal oxide part may consist of two or more oxides of the alkali metals Li, Na and K, with the proviso that if $Li_2O$ is present it may not be so in a quantity greater than 15 mole % as otherwise there is a risk that during production of the fibre phase separation occurs, crystalline LiMg-orthosilicate then being formed; if ZnO is present LiZn-orthosilicate may then also be produced.

If the glass contains less than 60 mole % $SiO_2$ then crystallization easily occurs, which causes an increase in scattering of the light signal. If the glass contains more than 70 mole % $SiO_2$ it becomes more difficult to process (higher melting temperature, high fibre-drawing temperature), while the quantity of oxide having exchangeable cations in the glass then becomes too small to obtain a sufficiently large difference in the refractive index of refraction.

If the glass contains less than 15 mole % of alkali metal oxides then the tendency to crystallize increases considerably, while the processability of the glass decreases.

If the glass contains more than 30 mole % of alkali metal oxides then the chemical resistance significantly decreases, the quantity of oxide having exchangeable cations then becoming too small to enable a sufficiently large difference in the refractive index.

The oxides MgO, SrO, BaO and ZnO may be present in the glass in an amount of 10 to 25 mole %. The amount of CaO if present should however not be greater than 15 mole %. If CaO is present in greater amounts the glass is apt to crystallize.

It may be necessary to obtain a difference of 1% in refractive index between the starting glass in the inner crucible (core glass) and the starting glass in the outer crucible (cladding glass) to have in the core glass up to 60% of the 10 to 25 mole % as magnesium oxide, the remaining part of the metal oxide being chosen of the group of metal oxides consisting of CaO, SrO, BaO and ZnO. The cladding glass usually comprises only magnesium oxide as a metal oxide in preferred embodiments.

Preferably, a glass composition is used comprising 60—70 mole % of silicon dioxide, 15—27.5 mole % of alkali metal oxides, the quantity of lithium oxide being 0—15 mole % and 12.5 mole % of (CaO+MgO). This makes it possible to realize a difference in the index of refraction of 1% while the intrinsic absorption of the glass is particularly low.

The presence of a comparatively small quantity of $GeO_2$ hardly affects the intrinsic absorption in the wavelength range which is of interest, while already in the case of small admixtures a marked

2

decrease of the processing temperature of the glasses can be realized. The addition of $Al_2O_3$, $Y_2O_3$ and $ZrO_3$ to the glasses improves the chemical resistance. The glasses may further contain small quantities of fluorine, which is added during preparation in the form of LiF.

The glasses are prepared as follows:

The starting materials are alkali metal carbonates and/or nitrates, silicon dioxide and other metal carbonate, nitrates and/or oxides (of Mg, Ca, Sr, Ba and/or Zn) of the highest possible purity. This means that the level of impurities absorbing in the relevant wavelength range of 1100 to 1500 nm (such as Cu, Fe, Cr) is less than 0.01 ppm. Furthermore, refining agents, such as $As_2O_3$ and $Sb_2O_3$ may be added in a quantity up to 1 mole %, calculated with respect to the glass composition.

Preferably, the glasses are melted by heating by means of a high-frequency electric field in a crucible made of a material having low dielectric losses at the selected frequency, the wall of the crucible being cooled (see, for example, United States Patent Specification 3,937,625).

The glass melts are kept for some time (for example 1 to 10 hours) at a temperature of at least 1300°C. Dry gases such as oxygen, carbon monoxide or carbon dioxide, optionally mixed with $D_2O$ may be blown through the melt. Thereafter rods are drawn from the melt. These rods serve as the starting material for the production of optical fibres. For this purpose they are melted preferably in a double crucible, at least the core glass being heated by means of a high-frequency electric field in a cooled wall crucible. This last-mentioned method and such a double crucible are the subject of a co-pending EP Patent Application no. 67489 (inventor Prof. Dr. H. H. Brongersma). This patent application describes a method of producing an optical fibre by means of a double crucible method, in which a double crucible is used of which at least the inner crucible is a double-walled crucible. In the space enclosed by the double wall a metal wire coil is accommodated. During manufacture of the optical fibre heat is generated in the core glass by means of a high-frequency electric field and the crucible wall is cooled with a coolant. During operation, a relatively cold layer of the core glass forms on the wall of the inner crucible. This comparatively cold glass layer which does not contribute to the build-up of the optical fibre prevents impurities from diffusing from the crucible material into the glasses and crucible material from dissolving. Thus it is possible to draw the optical fibres at higher temperatures than was considered to be practical up to the present. By using this method it becomes possible to keep at least the core glass at a temperature which is sufficiently high to allow drawing of the fibre without the possibility that impurities being absorbed from the inner crucible. During drawing of the fibre, the temperature of the glasses in the crucibles is at least 900°C or higher.

The invention will now be described in greater detail by way of examples with reference to the accompanying drawing and a number of embodiments.

Figure 1 shows a composition diagram.

Fig. 2 shows in a diagram the concentration of MgO and CaO respectively in a graded index fibre according to the invention.

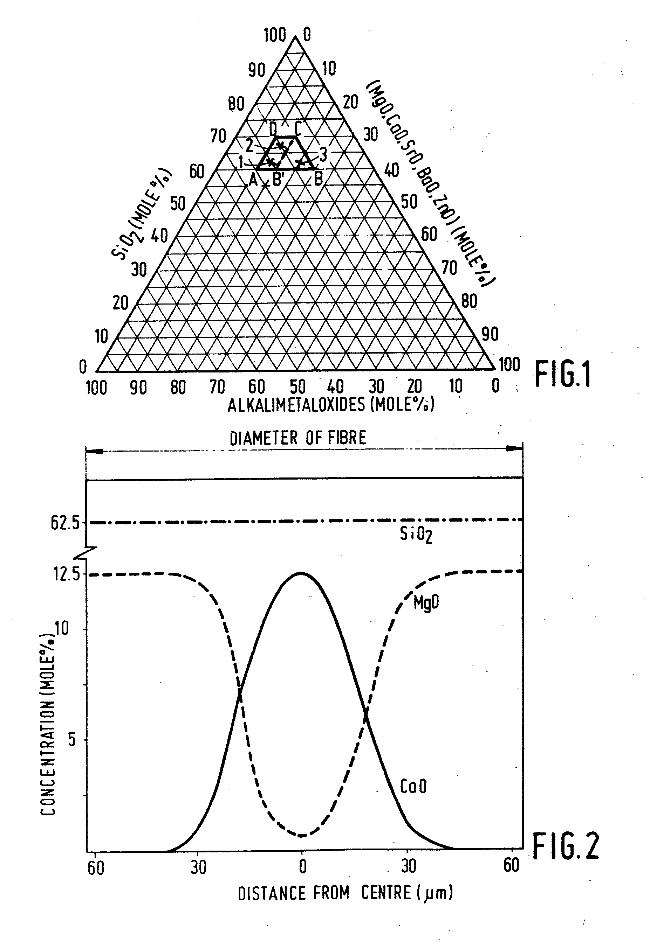

In the accompanying triangular diagram of figure 1 the region ABCD indicates the region of compositions, in which glasses are found which may be prepared at approximately 1300°C and higher and which, even after having been kept for 24 hours at 1000°C, have no or only little tendency to phase separation or crystallization except such glasses which contain CaO. In the region AB'CD glass compositions are however found which do not crystallize under these circumstances in case such glasses contain CaO in an amount up to 15 mole %. With these glasses optical fibres can be obtained which have an intrinsic scattering less than 0.45 dB/km at 1100 nm.

Table I shows some examples of glass compositions, the difference in the refractive index between the core and cladding glass being 1% of the refractive index of the cladding glass. In addition to the indicated quantities of oxides with exchangeable cations, the core and cladding glasses always contained 62.5 mole % $SiO_2$ and 25 mole % alkali metal oxides (5 mole % of $Li_2O$, 10 mole % of $Na_2O$ and 10 mole % of $K_2O$).

TABLE I

| Cladding glass | Core glass |
|---|---|
| 12.5 mole % MgO | 12.5 mole % CaO |
| 12.5 mole % MgO | 6.5 mole % MgO+6 mole % BaO |
| 12.5 mole % MgO | 3 mole % MgO+9.5 mole % SrO |
| 12.5 mole % MgO | 3 mole % BaO+9.5 mole % ZnO |

In Table II the composition of some glasses is given together with the intrinsic scattering at 1000 nm and the attenuation at 850 nm in dB. For measuring purposes only the glasses were drawn into fibres and coated with a silicone resin layer. The amounts are given in mole %.

3

# 0 068 580

TABLE II

| | SiO$_2$ | MgO | ZnO | SrO | BaO | Li$_2$O | Na$_2$O | K$_2$O | Intrinsic scattering | Attenuation |
|---|---|---|---|---|---|---|---|---|---|---|
| 1 | 62.5 | 4 | — | 8.5 | — | 5 | 10 | 10 | 1.20 | 6.4 |
| 2 | 62.5 | — | 12.5 | — | — | 5 | 10 | 10 | 0.93 | 13.5[*] |
| 3 | 62.5 | 6.5 | — | — | 6 | 5 | 10 | 10 | 1.90 | 7.5 |
| 4 | 62.5 | — | 15 | — | — | 4.5 | 9 | 9 | 0.99 | 6.5 |
| 5 | 62.5 | 6.5 | — | — | 6 | 4 | 8 | 8 | 1.60 | 6.4 |

[*] In compounding glass no. 2 relatively impure ZnO was used which resulted in the rather high attenuation owing to absorbtion.

In the fibres according to the invention the cladding glass has the highest chemical resistance compared with the core glasses and the lowest coefficient of thermal expansion, thanks to the presence of MgO. The low coefficient of thermal expansion results in that the outer surface of the optical fibre of the invention is subjected to a compressive stress, which considerably improves the strength of the fibre.

Embodiment 1

The following glasses were prepared by melting the relevant metal oxides in the form of the nitrate and silicon dioxide and by keeping them for $1\frac{1}{2}$ hour at 1350°C, oxygen being bubbled through the melt.

| Core glass: | | Cladding glass: | |
|---|---|---|---|
| Li$_2$O | 5 mole % | Li$_2$O | 5.0 mole % |
| Na$_2$O | 10 mole % | Na$_2$O | 10.0 mole % |
| K$_2$O | 10 mole % | K$_2$O | 10.0 mole % |
| CaO | 12.5 mole % | MgO | 12.5 mole % |
| SiO$_2$ | 62.5 mole % | SiO$_2$ | 62.5 mole % |
| n=1.530 | | n=1.515 | |

Optical fibres were drawn at a temperature of 1100°C until an overall diameter of 125 $\mu$m. A double crucible with a heated 10 cm long outflow pipe was used. In this manner a graded fibre was obtained. The numerical aperture was 0.19, the intrinsic scattering 0.45 dB/km at 1100 nm and 0.13 dB/km at 1500 nm, the total attenuation at 850 nm was 5.1 dB/km and the intrinsic scattering 1.3 dB/km.

The difference can be explained from the presence of water in the fibre.

Figure 2 shows the concentration gradient of this fibre obtained by using a scanning electromicroscope.

4

Embodiment 2.

An optical fibre can be obtained in the manner described in example 1 from glasses having the following composition:

| | Core glass: | | Cladding glass: | |
|---|---|---|---|---|
| $Li_2O$ | 4 mole % | $Li_2O$ | 4 mole % |
| $Na_2O$ | 8 mole % | $Na_2O$ | 8 mole % |
| $K_2O$ | 8 mole % | $K_2O$ | 8 mole % |
| MgO | 6.5 mole % | MgO | 12.5 mole % |
| BaO | 6 mole % | $SiO_2$ | 67.5 mole % |
| $SiO_2$ | 67.5 mole % | n=1.510 |
| n=1.525 | | |

Embodiment 3.

An optical fibre can be obtained in the manner described in example 1 from glasses having

| | Core glass: | | Cladding glass: | |
|---|---|---|---|---|
| $Li_2O$ | 3.5 mole % | $Li_2O$ | 3.5 mole % |
| $Na_2O$ | 7 mole % | $Na_2O$ | 7 mole % |
| $K_2O$ | 7 mole % | $K_2O$ | 7 mole % |
| MgO | 5 mole % | MgO | 20 mole % |
| ZnO | 15 mole % | $SiO_2$ | 62.5 mole % |
| $SiO_2$ | 62.5 mole % | n=1.516 |
| n=1.531 | | |

In this specification and in the following Claims the term core class means the glass being present in the inner crucible, the term cladding glass means the glass being present in the outer crucible of a double crucible arrangement for drawing fibres. After drawing of the fibres and the exchange between the exchangeable cations there results a graded index fibre having a continuous concentration gradient of the exchangeable cations between fibre axis and fibre circumference.

In this specification and in the Claims an overall glass composition is given for the optical fibre.

**Claims**

1. An optical fibre of the graded index type consisting of a silicate glass containing magnesium oxide together with one or more metal oxides having a cation which can be exchanged for the magnesium cation the refractive index gradient being caused by a decreasing metal oxide concentration and an increasing magnesium oxide concentration from the fibre axis in the direction of the fibre circumference, characterized in that the fibre consists of a glass having the following composition:

60 to 70 mole % silicon dioxide
15 to 30 mole % alkali metal oxides, the quantity of lithium oxide being 0—15 mole %
10 to 25 mole % magnesium oxide, in combination with at least one metal oxide chosen from the group consisting of CaO, SrO, BaO and ZnO, the quantity of calcium oxide being 0—15 mole %, and the content of impurities absorbing in the wavelength range up to 1500 nm being less than 0.01 ppm (parts per million).

2. An optical fibre as claimed in Claim 1, characterized in that up to 5 mole % of silicon dioxide is replaced by germanium oxide and/or aluminium oxide and up to 2.5 mole % of silicon dioxide is

**0 068 580**

replaced by yttrium oxide and/or zirconium dioxide calculated with respect to the total glass composition.

3. An optical fibre as claimed in Claim 1, characterized in that the fibre consists of a glass having the following composition:

60—70 mole % silicon dioxide
15—27.5 mole % alkali metal oxides, the quantity of lithium oxide being 0—15 mole %
12.5 mole % (MgO+CaO).

4. A method of producing an optical fibre of the graded index type, using a double crucible method, characterized in that the inner crucible contains a glass having the composition:

60—70 mole % of silicon dioxide
15—30 mole % alkali metal oxides, the quantity of lithium oxide being 0—15 mole %
10—25 mole % of at least one chosen metal oxide from the group consisting of CaO, SrO, BaO and ZnO and that the outer crucible contains a glass of the same molecular composition but which contains MgO instead of a metal oxide from the group formed by CaO, SrO, BaO and/or ZnO, the glasses being heated to the fibre drawing temperature and being drawn into an optical fibre.

5. A method of producing an optical fibre of the graded index type as claimed in Claim 4, characterized in that the core glass contains magnesium oxide up to 60% of the metal oxide amount, the remaining part of the 10—25 mole % being chosen from the group consisting of CaO, SrO, BaO and ZnO.

6. A method as claimed in Claim 4, characterized in that in the glass in the inner crucible as well as in the glass of the outer crucible up to 5 mole % of silicon dioxide is replaced by aluminium oxide and/or germanium oxide and up to 2.5 mole % of silicon dioxide is replaced by yttrium oxide and/or zirconium dioxide calculated with respect to the total glass composition.

7. A method as claimed in Claim 4, characterized in that the glass in the inner crucible has the composition

60—70 mole % silicon dioxide
15—27.5 mole % alkali metal oxides, the quantity of lithium oxide being 0—15 mole %
12.5 mole % calcium oxide

and that the outer crucible contains a glass of the same molecular composition but which contains magnesium oxide instead of calcium oxide, the glasses being heated to the fibre drawing temperature and being drawn into an optical fibre.

**Patentansprüche**

1. Optische Faser vom Indexgradiententyp aus einem Silikatglas, das Magnesiumoxid zusammen mit einem oder mehreren Metalloxiden enthält mit einem Kation, das gegen das Magnesiumkation ausgetauscht werden kann, wobei der Brechungsindexgradient verursacht wird durch eine abnehmende Metalloxidkonzentration und eine zunehmende Magnesiumoxidkonzentration von der Achse der Faser in Richtung des Umfangs der Faser, dadurch gekennzeichnet, dass die Faser aus einem Glas mit der untenstehenden Zusammensetzung besteht:

— 60 bis 70 mol.% Siliziumdioxid,
— 15 bis 30 mol.% Alkalimetalloxide, wobei die Menge Lithiumoxid 0 bis 15 mol.% beträgt,
— 10 bis 25 mol.% Magnesiumoxid, zusammen mit mindestens einem Metalloxid, gewählt aus der Gruppe, die aus CaO, SrO, BaO und ZnO besteht, wobei die Menge Kalziumoxid 0 bis 15 mol.% beträgt und die Menge Verunreinigungen, die in dem Wellenlängenbereich bis 1500 nm absorbieren, weniger als 0,01 ppm (parts per million) beträgt.

2. Optische Faser nach Anspruch 1, dadurch gekennzeichnet, dass bis zu 5 mol.% Siliziumdioxid durch Germaniumoxid und/oder Aluminiumoxid ersetzt ist und bis zu 2,5 mol.% Silziumdioxid durch Yttriumoxid und/oder Zirkondioxid ersetzt ist und zwar berechnet in Bezug auf die gesamte Glaszusammensetzung.

3. Optische Faser nach Anspruch 1, dadurch gekennzeichnet, dass die Faser aus einem Glas besteht mit der folgenden Zusammensetzung:

— 60 bis 70 mol.% Siliziumdioxid
— 15 bis 27,5 mol.% Alkalimetalloxid, wobei die Menge Lithiumoxid 0 bis 15 mol.% beträgt,
— 12,5 mol.% (MgO+CaO).

6

4. Verfahren zum Herstellen einer optischen Faser vom Indexgradiententyp unter Anwendung eines Verfahrens mit einem doppelten Tiegel, dadurch gekennzeichnet, dass der Innentiegel ein Glas enthält mit der folgenden Zusammensetzung:

— 60 bis 70 mol.% Siliziumdioxid
— 15 bis 30 mol.% Alkalimetalloxide, wobei die Menge Lithiumoxid 0 bis 15 mol.% beträgt,
— 10 bis 25 mol.% wenigstens eines Metalloxids gewählt aus der Gruppe, die aus CaO, SrO, BaO und ZnO besteht und dass der Aussentiegel ein Glas enthält mit derselben molekularen Zusammensetzung, das aber MgO statt eines Metalloxids aus der Gruppe, gebildet durch CaO, SrO, BaO und/oder ZnO, enthält, wobei die Gläser auf die Faserziehtemperatur erhitzt und zu einer optischen Faser gezogen werden.

5. Verfahren zum Herstellen einer optischen Faser von dem Indexgradiententyp nach Anspruch 4, dadurch gekennzeichnet, dass der Kernglas Magnesiumoxid bis 60% der Menge des Metalloxids enthält, wobei der restliche Teil der 10—25 mol.% aus der Gruppe gewählt wird, die aus CaO, SrO, BaO und ZnO besteht.

6. Verfahren nach Anspruch 4, dadurch gekennzeichnet, dass in dem Glas in dem Innentiegel sowie in dem Glas des Aussentiegel bis zu 5 mol.% Siliziumdioxide durch Aluminiumoxid und/oder Germaniumoxid ersetzt ist und bis zu 2,5 mol.% des Siliziumdioxids durch Yttriumoxid und/oder Zirkondioxid ersetzt ist und zwar berechnet in Bezug auf die gesamte Glaszusammensetzung.

7. Verfahren nach Anspruch 4, dadurch gekennzeichnet, dass das Glas in dem Innentiegel die folgende Zusammensetzung hat:

— 60 bis 70 mol.% Siliziumdioxid
— 15 bis 27,5 mol.% Alkalimetalloxide, wobei die Menge Lithiumoxid 0 bis 15 mol.% beträgt,
— 12,5 mol.% Kalziumoxid,

und dass der Aussentiegel ein Glas mit derselben molekularen Zusammensetzung enthält, welches Glas jedoch Magnesiumoxid statt Kalzium enthält, wobei die Gläser bis zu der Faserziehtemperatur erhitzt und zu einer optischen Faser gezogen werden.


## Revendications

1. Fibre optique du genre à gradient d'indice constituée par un verre au silicate contenant de l'oxyde de magnésium, avec au moins un oxyde métallique présentant un cation qui peut être échangé contre le cation magnésium, le gradient d'indice de réfraction étant provoqué par une concentration en oxyde métallique décroissante et une concentration en oxyde de magnésium croissante à partir de l'axe de la fibre dans la direction de la circonférence de la fibre, caractérisée en ce que la fibre est constituée par un verre présentant la composition suivante:

60 à 70% en moles de dioxyde de silicium
15 à 30% en moles d'oxydes de métaux alcalins la quantité d'oxyde de lithium étant de 0 à 15% en moles
10 à 25% en moles d'oxyde de magnésium en combinaison avec au moins un oxyde métallique choisi dans le groupe constitué par CaO, SrO, BaO et ZnO, la quantité d'oxyde de calcium étant de 0 à 15% en moles et la teneur en impuretés absorbantes dans la gamme de longueurs d'onde jusqu'à 1500 nm étant inférieure à 0,01 ppm (parties par million).

2. Fibre optique selon la revendication 1, caractérisée en ce que jusqu'à 5% en moles de dioxyde de silicium est remplacé par de l'oxyde de germanium et/ou de l'oxyde d'aluminium et jusqu'à 2,5% en moles de dioxyde de silicium peut être remplacé par de l'oxyde d'yttrium et/ou du dioxyde de zirconium, calculé par rapport à la composition de verre totale.

3. Fibre optique selon la revendication 1, caractérisée en ce que la fibre est constituée par un verre présentant la composition suivante: 60 à 70% en moles de dioxyde de silicium 15 à 27,5% en moles d'oxydes de métaux alcalins, la quantité d'oxyde de lithium étant de 0 à 15% en moles 12,5% en moles de (MgO+CaO).

4. Procédé pour la réalisation d'une fibre optique du genre à gradient d'indice, à l'aide du procédé à double creuset, caractérisé en ce que le creuset intérieur contient un verre présentant la composition:

60 à 70% en moles de dioxyde de silicium
15 à 30% en moles d'oxydes de métaux alcalins, la quantité d'oxyde de lithium étant de 0 à 15% en moles
10 à 25% en moles d'au moins un oxyde métallique du groupe constitué par CaO, SrO, BaO et ZnO et que le creuset extérieur contient un verre de la même composition moléculaire mais contenant MgO au lieu d'un oxyde métallique du groupe formé par CaO, SrO, BaO et/ou ZnO, les verres étant chauffés à la température d'étirage de fibres et étant étirés en une fibre optique.

5. Procédé pour la réalisation d'une fibre optique du genre à gradient d'indice selon la revendication 4, caractérisé en ce que le verre de noyau contient de l'oxyde de magnésium jusqu'à 60% de la quantité d'oxyde métallique, le reste de 10 à 25% en moles étant choisi dans le groupe constitué par CaO, SrO, BaO et ZnO.

6. Procédé selon la revendication 4, caractérisé en ce que dans le verre du creuset intérieur aussi bien que dans le verre du creuset extérieur, jusqu'à 5% en moles de dioxyde de silicium est remplacé par de l'oxyde d'aluminium et/ou de l'oxyde de germanium et jusqu'à 2,5% en moles du dioxyde de silicium est remplacé par de l'oxyde d'yttrium et/ou du dioxyde de zirconium, calculé par rapport à la composition de verre totale.

7. Procédé selon la revendication 4, caractérisé en ce que le verre dans le creuset intérieur présente la composition de 60 à 70% en moles de dioxyde de silicium, 15 à 27,5% en moles d'oxydes de métaux alcalins, la quantité d'oxyde de lithium étant de 0 à 15% en moles 12,5% en moles d'oxyde de calcium et que le creuset extérieur présente un verre de la même composition moléculaire, mais contenant de l'oxyde de magnésium au lieu de l'oxyde de calcium, les verres étant chauffés à la température d'étirage de la fibre et étant étirés en une fibre optique.

FIG.1

FIG.2

1